# DEMANDE DE BREVET EUROPEEN

(11) **EP 1 189 377 A1**
(43) Date de publication de la demande: **20.03.2002**
(21) Numéro de dépôt: 01402308.9
(22) Date de dépôt: 06.09.2001
(51) Int. Cl.: H04J 14/02

(54) **Dispositif de sélection et de conversion de longueurs d'onde, et matrice de commutation photonique l'incorporant**

(30) Priorité: 18.09.2000 FR 0011888
(71) Demandeur: ALCATEL, 75008 Paris (FR)
(72) Inventeur: Chiaroni, Dominique, 92160 Antony (FR); Le Sauze, Nicolas, 91440 Bures sur Yvette (FR); Pons, Alain, 91340 Ollainville (FR); Mestric, Roland, 75014 Paris (FR)
(74) Mandataire: Fournier, Michel

(57) **Abrégé**

Pour augmenter le débit de données optiques multiplexées en longueurs d'onde et commutées dans une matrice de commutation photonique, tout en maintenant une large bande spectrale, le dispositif de sélection et de conversion de longueur d'onde comporte un démultiplexeur à n sorties (Bλ1-Bλn) couplées respectivement à n entrées (A1-An) d'un coupleur (Cs) par l'intermédiaire de n dispositifs de conversion de longueur d'onde (OG1-OGn, C1λj-Cnλj).
Les dispositifs de conversion (OG1-OGn, C1λj-Cnλj) ont chacun une fonction de porte optique et fournissent sélectivement des signaux convertis (Sλj) portés par une même longueur d'onde.

Application à la commutation de paquets optiques.

## Description

L'invention se situe dans le domaine des réseaux de transmission optique et plus précisément celui des dispositifs de commutation pour signaux optiques organisés en paquets et multiplexés en longueurs d'onde.

D'une façon générale, les réseaux à commutation de paquets optiques comportent des noeuds munis de dispositifs de commutation rapide de paquets pour aiguiller des groupes de données de taille variable ou fixe, habituellement appelées "paquets" ou "cellules" selon qu'il s'agit respectivement d'un réseau de type Internet ou d'un réseau ATM.

Les matrices de commutation photoniques sont des dispositifs de commutation de type "tout optique" où les données, généralement sous la forme d'une modulation d'amplitude d'une onde porteuse optique, sont aiguillées d'une liaison optique à une autre en conservant leur nature optique, c'est-à-dire sans passer par une conversion dans le domaine électrique. Une des fonctions de ces matrices est d'assurer la synchronisation des paquets, en vue de gérer les conflits de façon à limiter au maximum les pertes de paquets. Si on utilise le multiplexage en longueur d'onde, ci-après désigné par WDM (de l'anglais "Wavelength Division Multiplexing"), les matrices doivent être prévues aussi pour prendre en compte la dimension spectrale des signaux à commuter.

L'invention concerne un dispositif de sélection et de conversion de longueur d'onde utilisable dans ces matrices pour la gestion du multiplexage en longueur d'onde.

L'invention concerne également une matrice de commutation photonique incorporant ce dispositif.

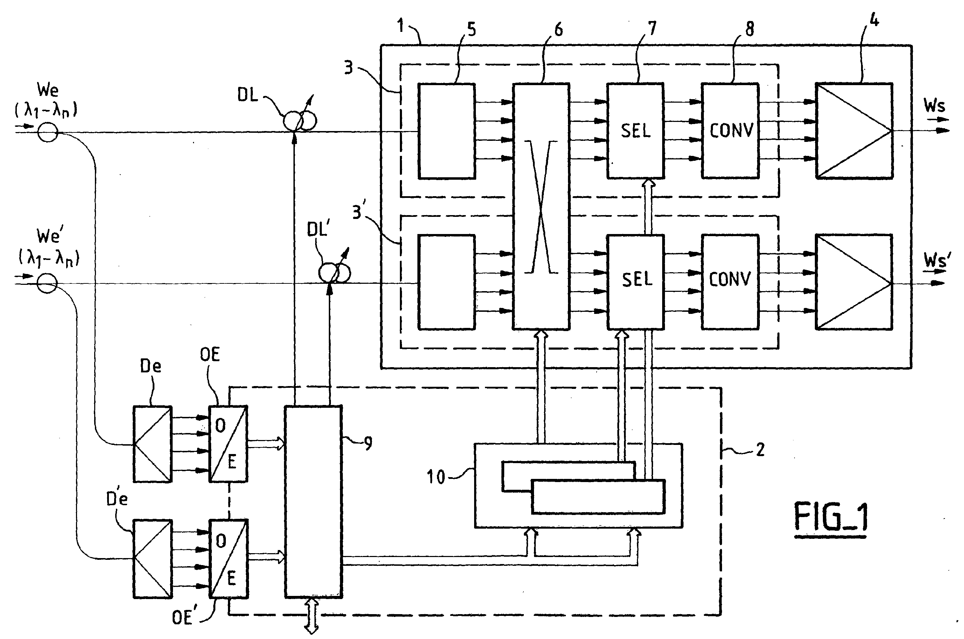

La figure 1 représente un exemple de commutateur optique où l'invention peut s'appliquer.

Le commutateur est essentiellement constitué d'une matrice de commutation photonique 1 et d'une unité électronique de commande 2 associée.

La matrice 1 qui reçoit plusieurs signaux optique WDM d'entrée We, We' est composée de plusieurs modules 3, 3'. Pour des raisons de clarté, deux modules et deux signaux WDM seulement sont représentés.

Les signaux We, We', constitués chacun de plusieurs canaux spectraux λ1-λn, sont couplés respectivement d'une part aux modules 3, 3' par l'intermédiaire de lignes à retard réglables DL, DL', et d'autre part à des interfaces de conversion optique-électrique OE, OE' de l'unité de commande 2 par l'intermédiaire de démultiplexeurs De, De'.

La matrice de commutation 1 comporte, couplés en cascade, des ensembles de lignes à retard 5 appartenant chacun à un des modules 3, 3', un commutateur spatial 6 de type "cross-bar" commun, des étages de sélection spectrale 7, des étages de réallocation spectrale 8 et des étages de couplage de sortie 4 appartenant chacun à un des modules.

L'unité électronique de commande 2 comporte une unité de traitement 9 reliée d'une part aux sorties des interfaces de conversion optique-électrique OE, OE' et d'autre part à un circuit de contrôle 10.

L'unité de traitement 9 a d'abord pour fonction de décoder les différents en-têtes des paquets reçus pour en extraire les destinations respectives. En fonction de ces informations de destination élaborées par des choix imposés par une table de routage, l'unité 9 détecte alors les éventuels conflits. Ainsi, pour chaque paquet reçu porté par chaque longueur d'onde, l'unité 9 détermine vers quel port de sortie de la matrice et à quel moment le paquet doit être dirigé. Ces informations de routage sont transmises au circuit de contrôle 10 qui envoie alors des signaux de commande appropriés au commutateur spatial 6 et aux étages de sélection spectrale 7.

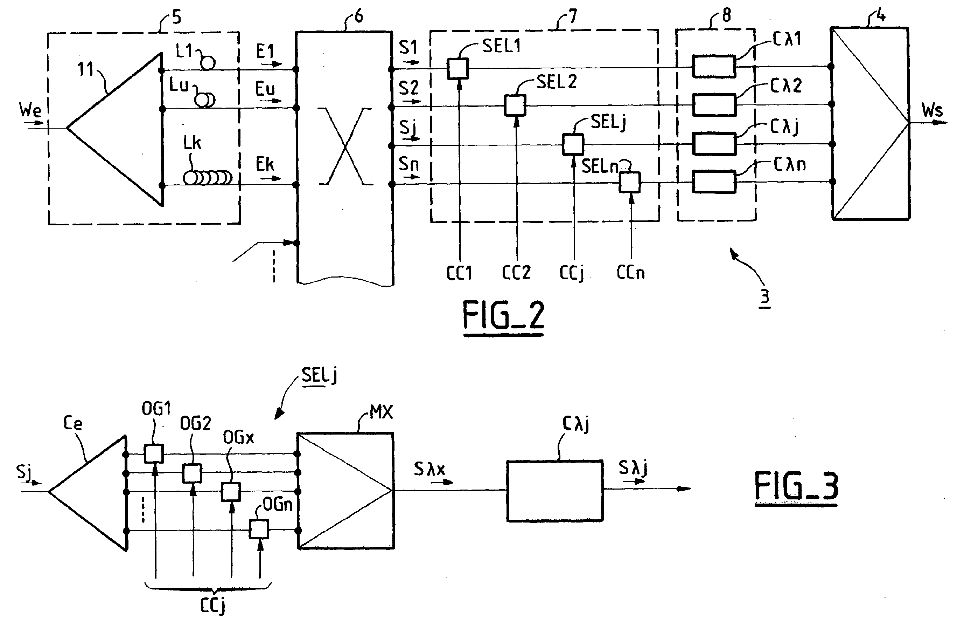

La figure 2 montre plus en détail l'un des modules 3 de la matrice 1. L'ensemble 5 est essentiellement constitué de k lignes à retard L1, Lu, Lk de longueurs différentes et dimensionnées chacune pour créer un retard multiple entier du temps de transmission d'un paquet. Chaque ligne à retard reçoit le multiplex d'entrée We associé au module, par l'intermédiaire d'un coupleur diffuseur 11.

Les sorties des k lignes à retard sont couplées respectivement à k entrées du commutateur spatial commun 6.

L'étage de sélection spectrale 7 est composé de n sélecteurs de longueur d'onde SEL1, SEL2, SELj, SELn commandés respectivement par des signaux de commande CC1, CC2, CCj, CCn issus du circuit de contrôle 10.

Les entrées des n sélecteurs sont couplées respectivement à n sorties du commutateur spatial 6 fournissant les signaux S1, S2, Sj, Sn. Les sorties des sélecteurs SEL1, SEL2, SELj, SELn sont reliées respectivement à n entrées d'un multiplexeur 4 par l'intermédiaire de convertisseurs de longueur d'onde Cλ1, Cλ2, Cλj, Cλn constituant l'étage de réallocation spectrale 8.

Ainsi, en fonction de l'état du commutateur spatial 6 et des longueurs d'onde sélectionnées par les différents sélecteurs, chaque paquet appartenant à un multiplex d'entrée quelconque et porté par une longueur d'onde quelconque peut subir un retard choisi, être aiguillé vers une sortie quelconque de la matrice et être porté en sortie par une nouvelle longueur d'onde.

La dimension spectral des signaux peut être prise en compte grâce à l'étage de sélection spectrale 7 et à l'étage de réallocation spectrale 8. Ainsi, chaque signal Sj issu d'une sortie du commutateur 6 est traité par un dispositif de sélection et de conversion de longueur d'onde SELj, Cλj d'un des modules 3 avant d'être injecté dans le multiplexeur 4 de ce module

La fonction de sélection réalisée par chaque sélecteur SELj consiste à extraire du signal WDM Sj reçu du commutateur 6 un signal porté par une seule des longueurs d'onde affectées aux canaux spectraux du signal WDM. Les convertisseurs de longueur d'onde Cλ1-Cλn d'un même module 3 ont pour fonction de faire porter les signaux ainsi extraits par de nouvelles longueurs d'onde λ1-λn fixées et différentes entre elles de façon à pouvoir être à nouveau combinées au moyen du multiplexeur 4 pour constituer un signal WDM de sortie Ws.

La figure 3 représente une réalisation connue d'un dispositif de sélection et de conversion de longueur d'onde SELj, Cλj associé à une des sorties du commutateur 6.

Le dispositif de sélection SELj comporte un coupleur d'entrée Ce de type diffuseur à une entrée et n sorties qui sont couplées respectivement à n entrées d'un multiplexeur MX par l'intermédiaire de n portes optiques OG1, OG2, OGx, OGn commandées électriquement par les signaux CCj. La sortie du multiplexeur MX est couplée à l'entrée du convertisseur de longueur d'onde Cλj.

En fonctionnement, le coupleur d'entrée Ce reçoit le signal WDM Sj et les portes optiques reçoivent des signaux de commande CCj tels qu'une seule des portes, par exemple OGx, soit passante. Ainsi, seule l'entrée du multiplexeur MX qui est couplée à la porte OGx reçoit le signal Sj et, compte tenu de la fonction de filtrage des multiplexeurs, seule la longueur d'onde, par exemple λx, qui est en accord avec cette entrée est transmise à la sortie du multiplexeur MX. Le multiplexeur fournit alors au convertisseur Cλj un signal Sλx qui appartient au canal spectral porté par la longueur d'onde λx. En fonction du signal Sλx ainsi sélectivement extrait, le convertisseur Cλj délivre le signal converti Sλj porté par la longueur d'onde λj imposée par ce convertisseur.

Ainsi, avec cette réalisation le convertisseur Cλj doit être en mesure de convertir l'une quelconque des longueurs d'onde du signal WDM reçu.

Les convertisseurs de longueur d'onde classiques sont réalisés au moyen d'amplificateurs optiques semi-conducteurs fonctionnant en régime de modulation de gain croisée, ou au moyen de structures interférométriques, par exemple de type Mach-Zehnder, exploitant la modulation de phase croisée. Ces dispositifs présentent une certaine bande passante spectrale, c'est-à-dire qu'il sont apte à convertir correctement des signaux optiques dont la porteuse a une longueur d'onde incluse dans cette bande passante.

Or, la largeur possible de bande passante spectrale des convertisseurs est liée en pratique à la fréquence du signal modulant les porteuses, donc au débit des données à transmettre. Plus précisément, pour un type de convertisseur donné, si on veut augmenter le débit, il faut dimensionner les composants optiques qui le constituent de façon à augmenter leur rapidité, donc celle du convertisseur, mais un dimensionnement dans ce sens entraîne une réduction de sa largeur de bande spectrale. Par exemple, pour un débit de 10 Gbit/s, on peut utiliser un convertisseur à base d'un amplificateur optique semi-conducteur à faible facteur de confinement et assurant une largeur de bande supérieure à 40 nm. Pour atteindre un débit de 40 Gbit/s, il faut augmenter le facteur de confinement de l'amplificateur utilisé et/ou la longueur de sa zone active, mais la largeur de bande se réduit, ce qui peut être insuffisant pour les applications WDM à large bande spectrale.

Une solution à ce problème peut consister à concevoir des convertisseurs plus élaborés, par exemple utilisant une cascade d'amplificateurs optiques semi-conducteurs. Cette solution permettrait bien d'augmenter le débit en maintenant la largeur de bande, mais de façon limitée et avec un coût supplémentaire.

L'invention a pour but de remédier à cet inconvénient. Dans ce but, l'invention a pour objet un dispositif de sélection et de conversion de longueur d'onde pour extraire sélectivement d'un signal multiplexé en longueur d'onde un signal porté par une longueur d'onde attribuée à un canal spectral dudit signal multiplexé et pour faire porter ledit signal sélectivement extrait par une longueur d'onde déterminée, caractérisé en ce qu'il comporte :
- un démultiplexeur spectral apte à séparer n canaux spectraux dudit signal multiplexé et à fournir sur n sorties n signaux extraits correspondants,
- un coupleur comprenant n entrées couplées respectivement auxdites sorties du démultiplexeur par l'intermédiaire de n dispositifs de conversion de longueur d'onde correspondants, et en ce que chaque dispositif de conversion a une fonction de porte optique et est apte à fournir sélectivement un signal converti porté par ladite longueur d'onde déterminée et fonction du signal extrait qu'il reçoit.

Grâce à la présence de plusieurs convertisseurs traitant chacun un signal porté par une longueur d'onde bien définie, il est possible d'utiliser des convertisseurs rapides mais dont la conception reste simple car il suffit de les dimensionner pour fonctionner sur une bande spectrale étroite centrée sur les longueurs d'onde qui leur sont respectivement attribuées. Par ailleurs, les puissances optiques en sortie des convertisseurs peuvent être réglées séparément, ce qui permet plus de flexibilité de réglage.

Selon un aspect de réalisation conforme à l'invention, chaque dispositif de conversion de longueur d'onde comprend un amplificateur optique semi-conducteur utilisé comme porte optique et recevant d'une part un desdits signaux extraits et d'autre part une onde de sonde ayant ladite longueur d'onde déterminée, ledit signal converti étant ladite onde de sonde amplifiée par ledit amplificateur avec un gain fonction de la puissance optique dudit signal extrait qu'il reçoit.

L'avantage de cette réalisation est qu'un seul composant, l'amplificateur optique semi-conducteur, joue à la fois le rôle de porte optique et de convertisseur de longueur d'onde. Il en résulte que la complexité, donc le coût de fabrication reste d'un niveau analogue à celle de la solution classique.

Avantageusement, chaque amplificateur est dimensionné pour présenter un gain maximum à la longueur d'onde du signal extrait qu'il reçoit.

L'invention a également pour objet une matrice de commutation photonique comportant le dispositif selon l'invention.

D'autres aspects et avantages de l'invention apparaîtront dans la suite de la description en référence aux figures.
- La figure 1 représente un exemple de commutateur optique, déjà commenté précédemment.
- La figure 2 représente l'un des modules constitutifs d'une matrice de commutation photonique, également commenté précédemment.
- La figure 3 représente une réalisation connue d'un dispositif de sélection et de conversion de longueur d'onde, également commenté précédemment.
- La figure 4 représente un schéma de principe d'un dispositif de sélection et de conversion de longueur d'onde selon l'invention.
- La figure 5 représente un premier mode de réalisation préféré du dispositif selon l'invention.
- La figure 6 représente un second mode de réalisation préféré du dispositif selon l'invention.

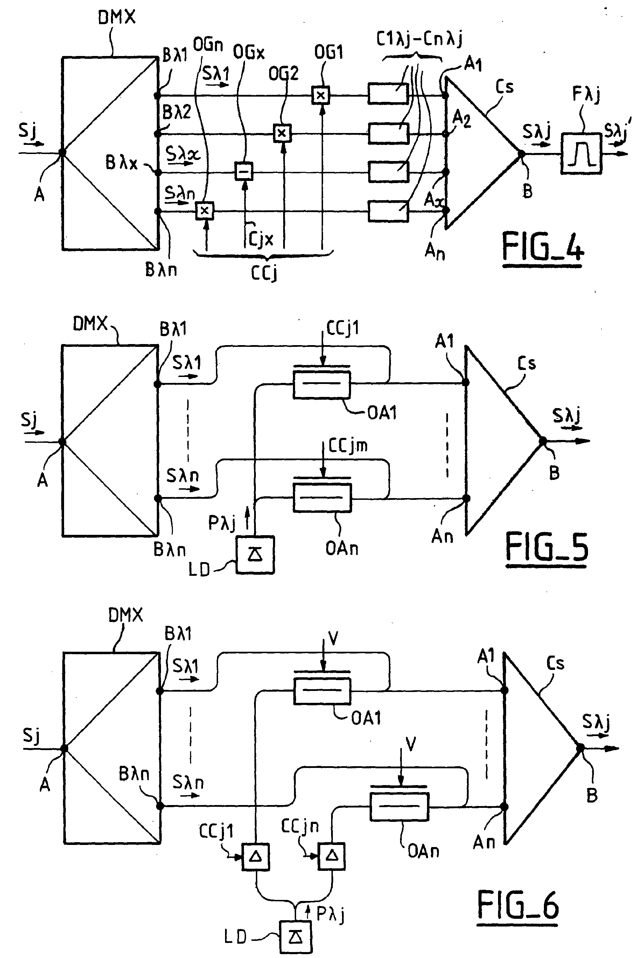

Le dispositif de sélection et de conversion de longueur d'onde représenté par le schéma de principe de la figure 4 comporte un démultiplexeur DMX muni d'une entrée A et de n sorties Bλ1-Bλn couplées respectivement à n entrées correspondantes A1-An d'un coupleur Cs par l'intermédiaire de n portes optiques OG1-OGn suivies de convertisseurs de longueur d'onde correspondants C1λj -Cnλj. Chaque convertisseur est prévu pour fournir un signal converti porté par une même longueur d'onde λj.

En fonctionnement, l'entrée A reçoit le signal WDM Sj et les sorties Bλ1-Bλn fournissent respectivement n signaux Sλ1-Sλn extraits du signal reçu Sj et correspondant à n canaux spectraux λ1-λn du signal WDM. Les portes optiques OG1-OGn reçoivent par ailleurs des signaux de commande CCj, tels qu'une seule des portes soit passante. Par exemple en appliquant le signal de commande Cjx à la porte OGx uniquement, le convertisseur associé à cette porte fournit seul un signal converti fonction du signal extrait correspondant Sλx.

Pour supprimer le bruit engendré par les portes optiques et/ou les convertisseurs, un filtre optique Fλj calé sur la longueur d'onde λj peut être couplé à la sortie B du coupleur Cs.

Les figures 5 et 6 représentent deux variantes de réalisation à base d'amplificateurs optiques semi-conducteurs OA1-OAn utilisés à la fois comme portes optiques et comme convertisseurs de longueur d'onde.

De façon connue en soi, les amplificateurs optiques semi-conducteurs fonctionnent en régime de modulation croisée de gain et reçoivent chacun d'une part un des signaux extraits Sλ1-Sλn par le démultiplexeur DMX et d'autre part une onde de sonde Pλj de longueur d'onde λj, fournie par une source laser commune LD.

L'onde de sonde Pλj et le signal extrait Sλ1-Sλn injectés dans chaque amplificateur ont ici des sens de propagation opposés. Bien que non indispensable, cette disposition limite les contraintes de filtrage en sortie du coupleur Cs.

Selon la variante de la figure 5, on réalise la fonction de porte optique des amplificateurs en agissant sur leurs tensions d'alimentation. A noter que l'onde de sonde pourrait être mélangée avec le signal d'entrée Sj à condition que le démultiplexeur DMX soit prévu pour pouvoir l'extraire par une sortie prévue à cet effet.

Selon la variante de la figure 6, on réalise la fonction de porte optique des amplificateurs par une injection sélective de l'onde de sonde Pλj dans un seul des amplificateurs. Pour cela, la source laser LD est couplée aux amplificateurs par l'intermédiaire de portes optiques commandées. Cette variante présente l'avantage de faciliter l'intégration des parties optiques de plusieurs dispositifs pour réaliser une matrice intégrée complète.

Pour optimiser la réalisation, chaque amplificateur sera dimensionné pour présenter un gain maximum à la longueur d'onde du signal extrait qu'il reçoit. Ceci peut être obtenu de façon bien connue des fabricants de composants optiques par un choix approprié de la composition de la couche active de chaque amplificateur ainsi que de sa géométrie.

Comme déjà décrit en référence aux figures 1 et 2, la matrice de commutation photonique 1 selon l'invention comporte un ou plusieurs ensemble(s) 5 de lignes à retard, un commutateur spatial 6, un ou plusieurs étage(s) de sélection spectrale 7 et un ou plusieurs étage(s) de réallocation spectrale 8. Selon l'invention, les étages de sélection spectrale 7 et de réallocation spectrale 8 comportent des dispositifs de sélection et de conversion de longueur d'onde tels que décrits en référence aux figures 4 à 6.

## Revendications

1. Dispositif de sélection et de conversion de longueur d'onde pour extraire sélectivement d'un signal (Sj) multiplexé en longueur d'onde un signal (Sλx) porté par une longueur d'onde attribuée à un canal spectral (λx) dudit signal multiplexé et pour faire porter ledit signal sélectivement extrait (Sλx) par une longueur d'onde déterminée (λj), **caractérisé en ce qu'**il comporte :
- un démultiplexeur spectral (DMX) apte à séparer n canaux spectraux (λ1-λn) dudit signal multiplexé (Sj) et à fournir sur n sorties (Bλ1-Bλn) n signaux extraits correspondants (Sλ1-Sλn),
- un coupleur (Cs) comprenant n entrées (A1-An) couplées respectivement auxdites sorties (Bλ1-Bλn) du démultiplexeur (DMX) par l'intermédiaire de n dispositifs de conversion de longueur d'onde correspondants (OG1-OGn, C1λj-Cnλj),
et **en ce que** chaque dispositif de conversion (OG1-OGn, C1λj-Cnλj) a une fonction de porte optique et est apte à fournir sélectivement un signal converti (Sλj) porté par ladite longueur d'onde déterminée (λj) et fonction du signal extrait (Sλ1-Sλn) qu'il reçoit.

2. Dispositif selon la revendication 1, **caractérisé en ce que** chaque dispositif de conversion de longueur d'onde (OG1-OGn, C1λj-Cnλj) comprend un amplificateur optique semi-conducteur (OA1-OAn) utilisé comme porte optique et recevant d'une part un desdits signaux extraits (Sλ1-Sλn) et d'autre part une onde de sonde (Pλj) ayant ladite longueur d'onde déterminée (λj), ledit signal converti (Sλj) étant ladite onde de sonde (Pλj) amplifiée par ledit amplificateur (OA1-OAn) avec un gain fonction de la puissance optique dudit signal extrait (Sλ1-Sλn) qu'il reçoit.

3. Dispositif selon la revendication 2, **caractérisé en ce que** chaque amplificateur (OA1-OAn) est dimensionné pour présenter un gain maximum à la longueur d'onde du signal extrait (Sλ1-Sλn) qu'il reçoit.

4. Dispositif selon l'une des revendications 2 à 3, **caractérisé en ce que** ladite onde de sonde (Pλj) et ledit signal extrait (Sλ1-Sλn) injectés dans ledit amplificateur (OA1-OAn) ont des sens de propagation opposés.

5. Dispositif selon l'une des revendications 2 à 4, **caractérisé en ce que** la fonction de porte optique des amplificateurs (OA1-OAn) est réalisée par une application sélective de tensions d'alimentation (CCj1-CCjn) sur lesdits amplificateurs (OA1-OAn).

6. Dispositif selon l'une des revendications 2 à 4, **caractérisé en ce que** la fonction de porte optique des amplificateurs (OA1-OAn) est réalisée par une injection sélective desdites ondes de sonde (Pλj) dans lesdits amplificateurs (OA1-OAn).

7. Dispositif selon l'une des revendications 1 à 6, **caractérisé en ce qu'**il comprend un filtre optique (Fλj) couplé à une sortie (B) dudit coupleur (Cs) et calé sur ladite longueur d'onde déterminée (λj).

8. Matrice de commutation photonique comportant, couplés en cascade, au moins un ensemble (5) de lignes à retard, un commutateur spatial (6), au moins un étage de sélection spectrale (7) et au moins un étage de réallocation spectrale (8), **caractérisé en ce que** ledit ou lesdits étage(s) de sélection spectrale (7) et de réallocation spectrale (8) comporte(nt) des dispositifs de sélection et de conversion de longueur d'onde conformes à l'une des revendications 1 à 7.
